# EUROPÄISCHE PATENTSCHRIFT

(11) **EP 3 799 762 B1**
(45) Veröffentlichungstag und Bekanntmachung des Hinweises auf die Patenterteilung: **28.06.2023**
(21) Anmeldenummer: 20196908.6
(22) Anmeldetag: 18.09.2020
(51) Int. Cl.: A45C 11/20

(54) **EINLEGEBEHÄLTER FÜR EINEN VERSANDTRÄGER**
INSERT CONTAINER FOR A SHIPPING CARRIER
RÉCIPIENT D'INSERTION POUR UN SUPPORT D'EXPÉDITION

(30) Priorität: 19.09.2019 DE 202019105203 U
(43) Veröffentlichungstag der Anmeldung: 07.04.2021
(73) Patentinhaber: va-Q-tec AG, 97080 Würzburg (DE)
(72) Erfinder: Caps, Roland, 63839 Kleinwallstadt (DE)
(74) Vertreter: Gleim, Christian Ragnar

(56) Entgegenhaltungen:
- CN-A- 107 323 878
- CN-A- 109 110 305
- DE-U1- 29 902 978
- GB-A- 2 552 821
- US-A- 2 562 248
- US-A1- 2012 031 957
- US-A1- 2014 366 480
- US-B1- 6 244 458

## Beschreibung

Die Erfindung betrifft Einlegebehälter für einen Versandträger gemäß dem unabhängigen Anspruch.

Versandträger sind zum Beispiel in der Form von Kleinteileträgern bzw. als Kisten, Fässer, Trays bzw. Gitterboxen bekannt, in die ein Einlegebehälter aus geschäumten Kunststoffen eingelegt wird.

Derartige Einlegebehälter sind bevorzugt aus einem Partikelschaumstoff, wie insbesondere expandiertem Polypropylen (EPP). Dieser Werkstoff zeichnet sich durch eine geringe Dichte und damit verbunden dadurch aus, dass damit leichte Bauteile herstellbar sind. Ferner hat expandiertes Polypropylen (EPP) den Vorteil, dass es gute wärmeisolierende Eigenschaften hat, so dass der Einsatz von daraus hergestellten Transportbehältern zum Transport von temperaurempfindlichen Gütern, zum Beispiel in der Form von Kühlboxen, weit verbreitet ist.

Bei konventionellen Transportboxen, zum Beispiel für Großhändler, ist es bekannt, einen Träger in der Form eines Logistikbehälters vorzusehen, in den ein wärmeisolierender Einlegebehälter eingelegt wird. Der Einlegebehälter besteht aus einer Lage aus Vakuumisolationspaneel, die von einem Partikelschaumstoff, wie insbesondere expandiertem Polypropylen (EPP) umgeben ist. Aufgrund der hohen Anforderungen hinsichtlich der Belastbarkeit beim Transport des Behälters sind besondere Eigenschaften hinsichtlich des geschäumten Materials gefordert. Es ist bekannt, dafür bei der Herstellung eines Partikelschaumstoffs, wie insbesondere expandiertem Polypropylen (EPP) die Wandstärken mit 4 cm und mehr auszuführen, um hinreichende Festigkeiten für das geschäumte Material zu erhalten.

Konventionelle Transportboxen sind aus US 10 329 074 B2, CN 107 323 878 A, CN 109 110 305 A, und WO 2014/118 821 A1 bekannt.

Ein Nachteil bei auf diese Art und Weise hergestellten Einlegebehältern ist, dass das geschäumte Einlegeteil ein großes Volumen einnimmt. Insbesondere bei der Verwendung von Vakuumisolationspaneelen zur Herstellung der Einlegebehälter ergibt sich der Vorteil dünner Wandstärken bei gleichzeitig hervorragenden Isoliereigenschaften, so dass es bei derartigen Einlegebehältern umso günstiger ist, je weniger Partikelschaumstoff, wie insbesondere expandiertes Polypropylen (EPP) zur Wandstärke beiträgt, weil so insgesamt dünne Wandstärken herstellbar sind.

Es ist die Aufgabe der Erfindung einen Einlegebehälter für einen Versandträger bereitzustellen, der die Nachteile im Stand der Technik überwindet und der insbesondere ein maximales Aufnahmevolumen ermöglicht.

Diese Aufgabe wird durch einen Einlegebehälter für einen Versandträger gemäß dem unabhängigen Anspruch gelöst. Vorteilhafte Aspekte bilden den Gegenstand der jeweiligen Unteransprüche.

Die Erfindung umfasst einen Einlegebehälter für einen Versandträger. Der Einlegebehälter umfasst mindestens eine Seitenwand (bevorzugt vier Seitenwände) und/oder einen Boden. Die mindestens eine Seitenwand und der Boden umschließen einen mit einem Deckel verschließbaren Aufnahmeraum (für das Transportgut). Die mindestens eine Seitenwand und/oder der Boden umfassen einen mehrschichtigen Wandaufbau umfassend mindestens eine Lage aus mindestens einem Vakuumisolationspaneel (bzw. flächigem Vakuumisolationselement entsprechender Geometrie) und mindestens eine Lage aus einem Partikelschaumstoff, wie insbesondere expandiertem Polypropylen (EPP). Die Lage aus einem Partikelschaumstoff, wie insbesondere expandiertem Polypropylen (EPP) ist an jeder Stelle mit einer Stärke im Bereich von 2 mm bis 12 mm ausgebildet.

Das Besondere bei der Erfindung ist die geringe Stärke in der Fläche. Aufgrund der im Vergleich zum Stand der Technik verringerten Stärke der Lage aus einem Partikelschaumstoff, wie insbesondere expandiertem Polypropylen (EPP) kann ein Einlegebehälter für einen Versandträger bereitgestellt werden, bei dem die Gesamtwandstärke verringert ist und das Aufnahmevolumen entsprechend größer ist. Damit lässt sich zudem eine vorteilhafte Gewichtsersparnis realisieren.

Gemäß einem vorteilhaften Aspekt ist die Lage aus einem Partikelschaumstoff, wie insbesondere expandiertem Polypropylen (EPP) in einem Flächenabschnitt der Seitenwand und/oder des Bodens im Bereich von 50 % bis 90 % der Gesamtfläche mit einer Stärke im Bereich von 2 mm bis 12 mm ausgebildet. Diese Wandstärken erlauben den mechanischen Schutz der Lage aus Vakuumisolationspaneel bei geringen Gesamtwandstärken.

Vorteilhafterweise ist die Lage aus einem Partikelschaumstoff, wie insbesondere expandiertem Polypropylen (EPP) mit einer Stärke im Bereich von 5 mm bis 10 mm ausgebildet. Diese Bereiche sind zur Herstellung in einer guten Qualität besonders geeignet.

Gemäß einem technisch vorteilhaften Aspekt umfasst die Lage aus einem Vakuumisolationspaneel eine Stärke im Bereich von 5 mm bis 30 mm, insbesondere im Bereich von 5 bis 12 mm. Die vorteilhaften Bereiche ergeben sich aufgrund der besonders vorteilhaften Isolationseigenschaften der Vakuumisolationspaneele.

Es ist außerdem bevorzugt, wenn die Lage aus einem Vakuumisolationspaneel ein einstückiges Faltpaneel umfasst, weil so die Bildung von Wärmebrücken möglichst verhindert wird, wodurch sich die Wärme- bzw. Kälteverluste minimieren.

Besonders vorteilhaft ist es, wenn die Lage aus einem Vakuumisolationspaneel ein IR-Trübungsmittel umfasst. So lassen sich besonders dünnwandige Einlegebehälter herstellen, insbesondere wenn gleichzeitig die Lage aus einem Vakuumisolationspaneel mittels des IR-Trübungsmittels und der Lage aus einem Partikelschaumstoff, wie insbesondere expandiertem Polypropylen (EPP) möglichst gering gehalten wird. Das IR-Trübungsmittel hat eine sehr geringe Dichte, bei Feststoff < 3,5 g/cm³ bzw. bei Schüttgut < 1,9 g/cm.

Gemäß einem besonders vorteilhaften Aspekt ist die Lage aus einem Vakuumisolationspaneel und die Lage aus einem Partikelschaumstoff, wie insbesondere expandiertem Polypropylen (EPP) stoffschlüssig verbunden. Das kann zum Beispiel durch das Einschäumen des Vakuumisolationspaneels mit dem Partikelschaumstoff, wie insbesondere expandierten Polypropylen (EPP) bei der Herstellung ausgeführt werden, wenn der Schaum an der Oberfläche des Paneels haftet.

Vorteilhafterweise ist die Lage aus einem Vakuumisolationspaneel und die Lage aus einem Partikelschaumstoff, wie insbesondere expandiertem Polypropylen (EPP) derart miteinander verbunden, dass das Vakuumisolationspaneel mit dem Partikelschaumstoff, wie insbesondere expandierten Polypropylen (EPP) zumindest abschnittsweise eingeschäumt ist. So lassen sich Einlegebehälter herstellen, bei denen die Lage aus einem Vakuumisolationspaneel auf zumindest einer Seite von dem Partikelschaumstoff, wie insbesondere expandierten Polypropylen (EPP) abgedeckt ist.

Ein weiterer vorteilhafter Aspekt sieht vor, dass die Lage aus einem Vakuumisolationspaneel von einer ersten Lage aus einem Partikelschaumstoff, wie insbesondere expandiertem Polypropylen (EPP) und von einer zweiten Lage aus einem Partikelschaumstoff, wie insbesondere expandiertem Polypropylen (EPP) vollständig eingeschäumt ist. Die erste Lage aus einem Partikelschaumstoff, wie insbesondere expandiertem Polypropylen (EPP) kann durch eine Wanne (Inliner) gebildet sein, die in eine zweite Lage aus einem Partikelschaumstoff, wie insbesondere expandiertem Polypropylen (EPP) in der Form einer Außenwanne eingelegt wird. Die beiden Wannen sind in der Größe derart unterschiedlich ausgebildet, dass die Lage aus Vakuumisolationspaneel dazwischen einlegbar ist.

Besonders bevorzugt umfasst der Einlegebehälter ferner einen Deckel zum Verschließen des Aufnahmeraums, der einen mehrschichtigen Wandaufbau umfassend mindestens eine Lage aus mindestens einem Vakuumisolationspaneel und mindestens eine Lage aus einem Partikelschaumstoff, wie insbesondere expandiertem Polypropylen (EPP) umfasst, und wobei die mindestens eine Lage aus einem Partikelschaumstoff, wie insbesondere expandiertem Polypropylen (EPP) jeweils an jeder Stelle (bzw. im Bereich von 50 % bis 90% der Gesamtfläche) mit einer Stärke im Bereich von 2 mm bis 12 mm ausgebildet ist.

Ein weiterer bevorzugter Aspekt sieht vor, dass der Deckel zumindest derart abschnittsweise durch ein Schiebeelement geöffnet werden kann, dass ein abschnittsweise geöffnetes Fach für Trockeneis oder ein anderes Phasenwechselmaterial ausgebildet ist.

Vorteilhafterweise umfasst der Deckel einen Vorsprung, der derart angeordnet ist, um ein vollständiges Herausziehen zu verhindern.

Ein weiterer Aspekt der Erfindung betrifft Transportbehälter umfassend einen Einlegebehälter wie hier beschrieben.

Im Folgenden wird die Erfindung anhand der in den beigefügten Zeichnungen dargestellten Beispiele näher erläutert. Identische Bezugszeichen betreffen die gleichen Merkmale in allen Figuren.

Es zeigen:
- Fig. 1: eine schematische perspektivische Ansicht eines Einlegebehälters gemäß einem Ausführungsbeispiel der Erfindung;
- Fig. 2: eine schematische perspektivische Ansicht eines Versandträgers, in den der Einlegebehälter aus Fig. 1 einlegbar ist;
- Fig. 3: eine schematische perspektivische Ansicht einer Lage aus einem Partikelschaumstoff, wie insbesondere expandiertem Polypropylen (EPP), die eine Innenwanne ist;
- Fig. 4: eine seitliche Schnittansicht des Einlegebehälters, in dem eine Lage aus Vakuumisolationspaneel angeordnet ist;
- Fig. 5: eine schematische perspektivische Ansicht einer Lage aus einem Partikelschaumstoff, wie insbesondere expandiertem Polypropylen (EPP), die eine Außenwanne ist; und
- Fig. 6: eine schematische perspektivische Ansicht eines Deckels für den Einlegebehälter aus Fig. 1.

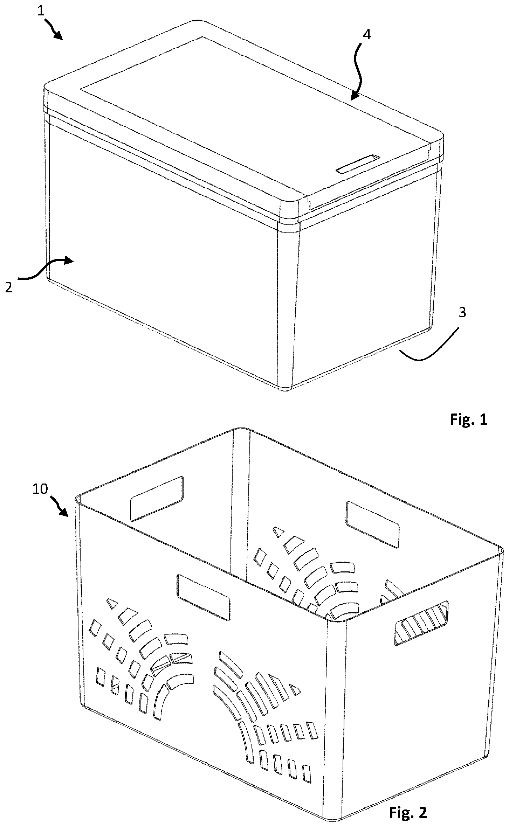

**Fig. 1** ist eine schematische perspektivische Ansicht eines Einlegebehälters 1 gemäß einem bevorzugten Ausführungsbeispiel der Erfindung, wobei insbesondere die äußere Form entsprechend dem Versandträger (siehe Fig. 2, Referenznummer 10) angepasst werden kann.

Die Außenkontur des Einlegebehälters 1 entspricht dabei der Innenkontur des Versandträgers.

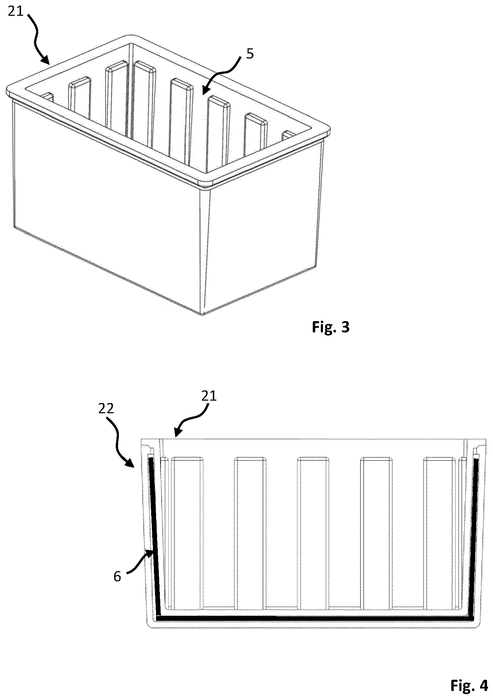

Der Einlegebehälter 1 hat vier Seitenwände 2, die einstückig mit dem Boden 3 ausgebildet sind. Der durch Seitenwände 2 und Boden 3 gebildete Aufnahmeraum (siehe Fig. 3, Referenznummer 5) ist von einem Deckel 4 verschlossen.

Die Vorteile der Erfindung ergeben sich im gezeigten Beispiel dadurch, dass Seitenwand 2 und Boden 3 einen mehrschichtigen Wandaufbau umfassend eine Lage aus einem Vakuumisolationspaneel (siehe Fig. 4, Referenznummer 6) und mindestens eine Lage aus einem Partikelschaumstoff, wie insbesondere expandiertem Polypropylen (EPP) (Fig. 3 und Fig. 4, Referenznummer 21, 22) umfassen. Dabei ist die mindestens eine Lage aus einem Partikelschaumstoff, wie insbesondere expandiertem Polypropylen (EPP) mit einer Stärke im Bereich von 2 mm bis 12 mm ausgebildet.

Der Einlegebehälter 1 ist oberhalb des in **Fig. 2** dargestellten Versandträgers 10 derart angeordnet, dass dieser von oben in die Öffnung des Versandträgers 10 eingeschoben werden kann.

In **Fig. 3** ist eine Innenwanne 21 aus einer Lage aus einem Partikelschaumstoff, wie insbesondere expandiertem Polypropylen (EPP) in einer seitlichen Perspektive gezeigt.

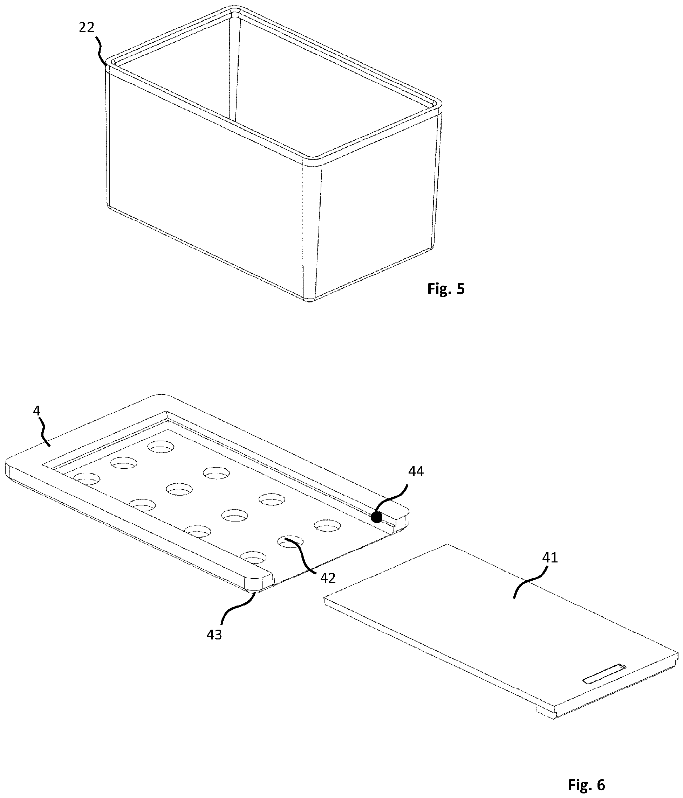

In diesem Beispiel für einen Einlegebehälter ist die Lage aus einem Vakuumisolationspaneel (vgl. Fig. 4) von einer ersten Lage aus einem Partikelschaumstoff, wie insbesondere expandiertem Polypropylen (EPP) (siehe Fig. 4, Referenznummer 21) und von einer zweiten Lage aus einem Partikelschaumstoff, wie insbesondere expandiertem Polypropylen (EPP) (siehe Fig. 4, Referenznummer 22) vollständig eingeschäumt bzw. zwischen separat geschäumter Innenwanne 21 als eine Lage aus einem Partikelschaumstoff, wie insbesondere expandiertem Polypropylen (EPP) und Außenwanne (siehe Fig. 5, Referenznummer 22) als eine separate Lage aus einem Partikelschaumstoff, wie insbesondere expandiertem Polypropylen (EPP) angeordnet.

Die Innenwanne 21 umfasst den Aufnahmeraum 5.

Der Einlegebehälter ist in **Fig. 4** in einer Schnittansicht von der Seite zu sehen. Die mindestens eine Lage aus einem Partikelschaumstoff, wie insbesondere expandierten Polypropylen (EPP) 21 ist bei den dargestellten Wannen 21, 22 an jeder Stelle (zumindest Wand und Boden) mit einer Stärke von 2 mm bis 12 mm ausgebildet.

In dieser Darstellung ist auch die Lage aus einem Vakuumisolationspaneel 6 dargestellt, welches eine Stärke von 8 mm bis 10 mm hat. Das Vakuumisolationspaneel 6 ist ein einstückiges Faltpaneel, welches zum Beispiel ein IR-Trübungsmittel umfasst. Es können dünne Lagen und mehrere Lagen mit Vakuumisolationspaneel 6 eingesetzt werden.

Bevorzugt sind die Lage aus einem Vakuumisolationspaneel 6 und die mindestens eine Lage aus einem Partikelschaumstoff, wie insbesondere expandiertem Polypropylen (EPP) verbunden, was zum Beispiel durch Einschäumen oder Einlegen bei der Herstellung realisiert werden kann.

Dazu wurde die Innenwanne 21 aus Fig. 3 in die Außenwanne 22 aus **Fig. 5** eingeschoben, damit das Vakuumisolationspaneel von den zwei Lagen aus einem Partikelschaumstoff, wie insbesondere expandierten Polypropylen (EPP) 22, 21 umgeben ist oder derart mit diesen verbunden ist, dass das Vakuumisolationspaneel mit dem Partikelschaumstoff, wie insbesondere expandierten Polypropylen (EPP) zumindest abschnittsweise eingeschäumt ist.

Der Einlegebehälter umfasst ferner einen Deckel 4, wie in **Fig. 6** gezeigt, der zumindest derart abschnittsweise durch ein Schiebeelement 41 geöffnet werden kann, dass ein abschnittsweise geöffnetes Fach (mit Öffnungen 42) für Trockeneisplatten oder ein alternatives PCM-Material ausgebildet ist. Der Deckel 4 umfasst einen Vorsprung 44, der derart angeordnet ist, um ein vollständiges Herausziehen zu verhindern. Vorteilhafterweise umfasst der Deckel 4 eine schräge Auflagefläche 43.

## Patentansprüche

1. Einlegebehälter (1) für einen Versandträger (10), welcher Einlegebehälter (1) mindestens eine Seitenwand (2) und einen Boden (3) umfasst, die einen mit einem Deckel (4) verschließbaren Aufnahmeraum (5) umschließen, wobei die mindestens eine Seitenwand (2) und/oder der Boden (3) einen mehrschichtigen Wandaufbau umfassend mindestens eine Lage aus mindestens einem Vakuumisolationspaneel (6) und mindestens zwei Lagen aus einem Partikelschaumstoff, wie insbesondere expandiertem Polypropylen (EPP) (21, 22), umfassen, und wobei die mindestens zwei Lagen aus Partikelschaumstoff (21, 22) jeweils an jeder Stelle mit einer Stärke im Bereich von 2 mm bis 12 mm ausgebildet ist, wobei die Lage aus einem Vakuumisolationspaneel (6) zwischen einer ersten Lage aus Partikelschaumstoff (21) und von einer zweiten Lage aus Partikelschaumstoff (22) eingeschäumt ist.

2. Einlegebehälter (1) nach Anspruch 1, wobei die mindestens eine Lage aus expandiertem Polypropylen (EPP) (21, 22) in einem Flächenabschnitt eine Seitenwand (2) und/oder der Boden (3) und/oder der Deckel (4) im Bereich von 50% bis 90 % der Gesamtfläche mit einer Stärke im Bereich von 2 mm bis 12 mm ausgebildet ist.

3. Einlegebehälter (1) nach Anspruch 1 oder 2, wobei die mindestens eine Lage aus expandiertem Polypropylen (EPP) (21, 22) mit einer Stärke im Bereich von 5 mm bis 10 mm ausgebildet ist.

4. Einlegebehälter (1) nach einem der vorangehenden Ansprüche, wobei die Lage aus einem Vakuumisolationspaneel (6) eine Stärke im Bereich von 5 mm bis 30 mm, insbesondere im Bereich von 5 bis 12 mm umfasst.

5. Einlegebehälter (1) nach einem der vorangehenden Ansprüche, wobei die Lage aus einem Vakuumisolationspaneel (6) ein einstückiges Faltpaneel umfasst.

6. Einlegebehälter (1) nach einem der vorangehenden Ansprüche, wobei die Lage aus einem Vakuumisolationspaneel (6) ein IR-Trübungsmittel umfasst.

7. Einlegebehälter (1) nach einem der vorangehenden Ansprüche, wobei die Lage aus einem Vakuumisolationspaneel (6) und die mindestens eine Lage aus expandiertem Polypropylen (EPP) (21, 22) stoffschlüssig verbunden sind.

8. Einlegebehälter (1) nach Anspruch 7, wobei die Lage aus einem Vakuumisolationspaneel (6) und die mindestens eine Lage aus expandiertem Polypropylen (EPP) (21, 22) derart miteinander verbunden sind, dass das Vakuumisolationspaneel (6) mit dem expandierten Polypropylen (EPP) zumindest abschnittsweise eingeschäumt ist.

9. Einlegebehälter (1) nach Anspruch 7, wobei die Lage aus einem Vakuumisolationspaneel (6) von einer ersten Lage aus expandiertem Polypropylen (EPP) (21) und von einer zweiten Lage aus expandiertem Polypropylen (EPP) (22) vollständig eingeschäumt ist.

10. Einlegebehälter (1) nach einem der vorangehenden Ansprüche, ferner umfassend einen Deckel (4) zum Verschließen des Aufnahmeraums (5) der einen mehrschichtigen Wandaufbau umfassend mindestens eine Lage aus mindestens einem Vakuumisolationspaneel (6) und mindestens eine Lage aus expandiertem Polypropylen (EPP) (21, 22) umfasst, und wobei die mindestens eine Lage aus expandiertem Polypropylen (EPP) (21, 22) jeweils an jeder Stelle mit einer Stärke im Bereich von 2 mm bis 12 mm ausgebildet ist

11. Einlegebehälter (1) nach Anspruch 10, wobei der Deckel (4) zumindest derart abschnittsweise durch ein Schiebeelement (41) geöffnet werden kann, dass ein abschnittsweise geöffnetes Fach für Trockeneis ausgebildet ist.

12. Einlegebehälter (1) nach Anspruch 10 oder 11, wobei der Deckel (4) einen Vorsprung (44) umfasst, der derart angeordnet ist, um ein vollständiges Herausziehen zu verhindern.

13. Einlegebehälter (1) nach einem der Ansprüche 10 bis 12, wobei der Deckel (4) eine schräge Auflagefläche (43) umfasst.

14. Transportbehälter umfassend einen Einlegebehälter (1) nach einem der vorangehenden Ansprüche.

## Claims

1. Insertion container (1) for a shipment carrier (10), which insertion container (1) comprises at least one side wall (2) and a base (3) which enclose a receiving space (5) which can be closed with a lid (4), the at least one side wall (2) and/or the base (3) having a multilayer wall structure including at least one layer of at least one vacuum insulation panel (6) and at least two layers of a particle foam material, such as in particular expanded polypropylene (EPP) (21, 22), and wherein the at least two layers of particle foam material (21, 22) are each formed at each location with a thickness in the range of from 2 mm to 12 mm, wherein the layer of a vacuum insulation panel (6) is foamed in between a first layer of particle foam material (21) and a second layer of particle foam material (22).

2. Insertion container (1) according to claim 1, wherein the at least one layer of expanded polypropylene (EPP) (21, 22) in one surface section is a side wall (2) and/or the base (3) and/or the lid (4) in the range of from 50% to 90% of the total surface with a thickness in the range of from 2 mm to 12 mm.

3. Insertion container (1) according to claim 1 or 2, wherein the at least one layer is formed from expanded polypropylene (EPP) (21, 22) with a thickness in the range of from 5 mm to 10 mm.

4. Insertion container (1) according to any one of the preceding claims,
wherein the layer of a vacuum insulation panel (6) has a thickness in the range of from 5 mm to 30 mm, in particular in the range of from 5 mm to 12 mm.

5. Insertion container (1) according to any one of the preceding claims,
wherein the layer of a vacuum insulation panel (6) comprises a one-piece folded panel.

6. Insertion container (1) according to any one of the preceding claims,
wherein the layer of vacuum insulation panel (6) comprises an IR opacifier.

7. Insertion container (1) according to any one of the preceding claims,
wherein the layer of a vacuum insulation panel (6) and the at least one layer of expanded polypropylene (EPP) (21, 22) are integrally connected.

8. Insertion container (1) according to claim 7, wherein the layer of a vacuum insulation panel (6) and the at least one layer of expanded polypropylene (EPP) (21, 22) are connected to one another in such a way that the vacuum insulation panel (6) is at foamed in with the expanded polypropylene (EPP) polypropylene (EPP) at least in sections.

9. Insertion container (1) according to claim 7, wherein the layer of a vacuum insulation panel (6) is completely foamed in between a first layer of expanded polypropylene (EPP) (21) and a second layer of expanded polypropylene (EPP) (22).

10. Insertion container (1) according to any one of the preceding claims, further comprising a lid (4) for closing the receiving space (5) which has a multilayer wall structure including at least one layer of at least one vacuum insulation panel (6) and at least one layer of expanded polypropylene (EPP) (21, 22), and wherein said at least one layer of expanded polypropylene (EPP) (21, 22) is formed at each location with a thickness in the range of from 2 mm to 12 mm.

11. Insertion container (1) according to claim 10, wherein the lid (4) can be opened at least in sections by a sliding element (41) in such a way that a compartment for dry ice is created which is opened in sections.

12. Insertion container (1) according to any one of claims 10 or 11, wherein the lid (4) comprises a projection (44) arranged so as to prevent complete pull-out of the same.

13. Insertion container (1) according to any one of claims 10 to 12, wherein the lid (4) comprises a slanted bearing surface (43).

14. Transport container comprising an insertion container (1) according to any one of the preceding claims.

## Revendications

1. Récipient d'insertion (1) destiné pour un porteur de livraisons (10), lequel récipient d'insertion (1) comprenant au moins une paroi latérale (2) et une base (3) qui entourent un espace de réception (5) pouvant être fermé par un couvercle (4), la au moins une paroi latérale (2) et/ou la base (3) ayant une structure de paroi multicouche comprenant au moins une couche d'au moins un panneau isolant sous vide (6) et au moins deux couches d'un matériau en mousse de particules, comme en particulier le polypropylène expansé (EPP) (21, 22), et dans lequel les au moins deux couches de matériau en mousse de particules (21, 22) sont chacune formées à chaque endroit avec une épaisseur dans une plage allant de 2 mm à 12 mm, la couche d'un panneau isolant sous vide (6) étant moussée entre une première couche de matériau en mousse de particules (21) et une deuxième couche de matériau en mousse de particules (22).

2. Récipient d'insertion (1) selon la revendication 1, dans lequel la au moins une couche de polypropylène expansé (EPP) (21, 22) dans une partie de la surface d'une paroi latérale (2) et/ou la base (3) et/ou le couvercle (4) dans la plage allant de 50% à 90 % de la surface totale est formé/e avec une épaisseur dans la plage allant de 2 mm à 12 mm.

3. Récipient d'insertion (1) selon la revendication 1 ou 2, dans lequel la au moins une couche de polypropylène expansé (EPP) (21, 22) est formée avec une épaisseur dans la plage allant de 5 mm à 10 mm.

4. Récipient d'insertion (1) selon l'une quelconque des revendications précédentes, dans lequel la couche d'un panneau isolant sous vide (6) a une épaisseur dans la plage allant de 5 mm à 30 mm, en particulier dans une plage allant de 5 mm à 12 mm.

5. Récipient d'insertion (1) selon l'une quelconque des revendications précédentes, dans lequel la couche d'un panneau isolant sous vide (6) comprend un panneau plié d'une seule pièce.

6. Récipient d'insertion (1) selon l'une quelconque des revendications précédentes, dans lequel la couche d'un panneau isolant sous vide (6) comprend un opacifiant IR.

7. Récipient d'insertion (1) selon l'une quelconque des revendications précédentes, dans lequel la couche d'un panneau isolant sous vide (6) et la au moins une couche de polypropylène expansé (EPP) (21, 22) sont intégralement collées.

8. Récipient d'insertion (1) selon la revendication 7, dans lequel la couche d'un panneau isolant sous vide (6) et la au moins une couche de polypropylène expansé (EPP) (21, 22) sont reliées l'une à l'autre de manière à ce que le panneau isolant sous vide (6) soit moussé avec le polypropylène expansé (EPP) au moins par sections.

9. Récipient d'insertion (1) selon la revendication 7, dans lequel la couche d'un panneau isolant sous vide (6) est entièrement moussée entre une première couche de polypropylène expansé (EPP) (21) et une deuxième couche de polypropylène expansé (EPP) (22).

10. Récipient d'insertion (1) selon l'une quelconque des revendications précédentes, comprenant en outre un couvercle (4) pour fermer l'espace de réception (5) qui comprend une structure de paroi multicouche comprenant au moins une couche d'au moins un panneau isolant sous vide (6) et au moins une couche de polypropylène expansé (EPP) (21, 22), et dans lequel ladite au moins une couche de polypropylène expansé (EPP) (21, 22) est formée à chaque endroit avec une épaisseur dans une plage allant de 2 mm à 12 mm.

11. Récipient d'insertion (1) selon la revendication 10, dans lequel le couvercle (4) peut être ouvert au moins en sections par un élément coulissant (41) de manière à former un compartiment pour la glace sèche qui est ouvert en sections.

12. Récipient d'insertion (1) selon l'une quelconque des revendications 10 ou 11, dans lequel le couvercle (4) comprend une saillie (44) disposée de manière à empêcher l'extraction complète de celui-ci.

13. Récipient d'insertion (1) selon l'une quelconque des revendications 10 à 12, dans lequel le couvercle (4) comporte une surface d'appui inclinée (43).

14. Récipient de transport comprenant un récipient d'insertion (1) selon l'une quelconque des revendications précédentes.
